# EUROPÄISCHE PATENTSCHRIFT

(11) **EP 1 615 064 B1**
(45) Veröffentlichungstag und Bekanntmachung des Hinweises auf die Patenterteilung: **28.11.2007**
(21) Anmeldenummer: 05106113.3
(22) Anmeldetag: 06.07.2005
(51) Int. Cl.: G02B 21/00, G02B 5/04, G02B 26/06

(54) **Reflektiver Phasenfilter für ein Rastermikroskop**
Reflective phase filter for a scanning microscope
Filtre de phase réflectif pour un microscope à balayage

(30) Priorität: 07.07.2004 DE 102004032953
(43) Veröffentlichungstag der Anmeldung: 11.01.2006
(73) Patentinhaber: Leica Microsystems CMS GmbH, 35578 Wetzlar (DE)
(72) Erfinder: GUGEL, Hilmar, 69221, Dossenheim (DE)
(74) Vertreter: Naumann, Ulrich

(56) Entgegenhaltungen:
- DE-A1- 10 107 095
- US-A- 4 801 193
- US-A- 5 742 577
- US-A1- 2004 017 572
- DATABASE INSPEC [Online] THE INSTITUTION OF ELECTRICAL ENGINEERS, STEVENAGE, GB; 1951, INGELSTAM E: "A slit phase contrast apparatus with modified phase plates for the examination of optical gratings and other objects with variations in one dimension" XP002345691 Database accession no. 1951A05323 & Arkiv for Fysik Sweden, Bd. 3, Nr. 2, 1951, Seiten 35-39,
- KHONINA S N ET AL: "Gauss-Laguerre modes with different indices in prescribed diffraction orders of a diffractive phase element" OPTICS COMMUNICATIONS, NORTH-HOLLAND PUBLISHING CO. AMSTERDAM, NL, Bd. 175, Nr. 4-6, März 2000 (2000-03), Seiten 301-308, XP004202907 ISSN: 0030-4018

## Beschreibung

Die Erfindung betrifft ein Rastermikroskop mit einer Lichtquelle zur Erzeugung eines Beleuchtungslichtbündels, mit einer fokussierenden Optik zur Fokussierung des Lichtbündels in einer Brennebene, und mit einem Mittel zur Formung des Fokus des Lichtbündels, wobei das Mittel zur Formung des Fokus zwischen einem ersten Teil des Lichtbündels und einem zweiten Teil des Lichtbündels eine Phasenverschiebung bewirkt.

In der Rastermikroskopie (Scanmikroskopie) wird eine Probe mit einem Lichtstrahl beleuchtet, um das von der Probe emittierte Reflexions- oder Fluoreszenzlicht zu beobachten. Der Fokus des Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so daß ein Spiegel in x-und der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegeistellung ausgerüstet. Neben diesen sogenannten strahlscannenden Methoden sind auch Scanmikroskope mit räumlich feststehendem Beleuchtungslichtstrahl bekannt, bei denen die Probe zur Abtastung mit Hilfe eines Feinpositioniertisches verfahren wird. Diese Scanmikroskope werden objektscannend genannt.

Speziell in der konfokalen Rastermikroskopie wird ein Objekt mit dem Fokus eines Lichtstrahles in drei Dimensionen abgetastet.

Ein konfokales Rastermikroskop umfasst im allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so daß man eine Punktinformation erhält, die durch sequentielles Abtasten des Objekts zu einem dreidimensionalen Bild führt. Meist wird ein dreidimensionales Bild durch schichtweise Bilddatennahme erzielt.

Die Leistung des vom Objekt kommenden Lichtes wird in festen Zeitabständen während des Abtastvorganges gemessen und so Rasterpunkt für Rasterpunkt abgetastet. Der Messwert muss eindeutig der dazugehörigen Scanposition zugeordnet sein, um aus den Messdaten ein Bild erzeugen zu können. Zweckmäßiger Weise werden hierfür die Zustandsdaten der Verstellelemente der Strahlablenkeinrichtung laufend mitgemessen oder, was allerdings weniger genau ist, direkt die Steuersolldaten der Strahlablenkeinrichtung verwendet.

Es ist auch möglich in einer Durchlichtanordnung beispielsweise das Fluoreszenzlicht oder die Transmission des Anregungslichtes kondensorseitig zu detektieren. Der Detektionslichtstrahl gelangt dann nicht über die Scanspiegel zum Detektor (Non descan Anordnung). Für die Detektion des Fluoreszenzlichtes wäre in der Durchlichtanordnung eine kondensorseitige Detektionsblende nötig, um, wie in der beschriebenen Descan-Anordnung, eine dreidimensionale Auflösung zu erzielen. Im Falle der Zweiphotonenanregung kann jedoch auf eine kondensorseitige Detektionsblende verzichtet werden, da die Anregungswahrscheinlichkeit vom Quadrat der Photonendichte abhängt (proportional der Intensität²), die naturgemäß im Fokus viel höher ist als in den Nachbarregionen. Das zu detektierende Fluoreszenzlicht stammt daher mit großer Wahrscheinlichkeit zum aller größten Teil aus der Fokusregion, was eine weitere Differenzierung von Fluoreszenzphotonen aus dem Fokusbereich von Fluoreszenzphotonen aus den Nachbarbereichen mit einer Blendenanordnung überflüssig macht.

Das Auflösungsvermögen eines konfokalen Rastermikroskops ist unter anderem durch die Intensitätsverteilung und die räumliche Ausdehnung des Fokus des Anregungslichtstrahls gegeben. Eine Anordnung zur Steigerung des Auflösungsvermögens für Fluoreszenzanwendungen ist aus der PCT/DE/95/00124 bekannt. Hierbei werden die lateralen Randbereiche des Fokusvolumens des Anregungslichtstrahls mit einem Lichtstrahl einer anderen Wellenlänge, dem sog. Stimulationslichtstrahl, der von einem zweiten Laser emittiert wird, beleuchtet, um dort die vom Licht des ersten Lasers angeregten Probenbereiche stimuliert in den Grundzustand zurück zu bringen. Detektiert wird dann nur das spontan emittierte Licht aus den nicht vom zweiten Laser beleuchteten Bereichen, so daß insgesamt eine Auflösungsverbesserung erreicht wird. Für dieses Verfahren hat sich die Bezeichnung STED (Stimulated Emission Depletion) eingebürgert.

Eine neue Entwicklung hat gezeigt, daß man gleichzeitig sowohl lateral, als auch axial eine Auflösungsverbesserung erzielen kann, wenn es gelingt, den Fokus des Stimulationslichtstrahles innen hohl zu machen. Hierzu wird in den Strahlengang des Stimulationslichtstrahles ein Phasenfilter eingebracht, der ein runde λ/2-Platte beinhaltet, die in ihrem Durchmesser kleiner als der Strahldurchmesser ist und folglich überleuchtet wird. Die Form des Stimulationsfokus ergibt sich aus der Fouriertransformierten der Phasenfilterfunktion.

Derzeit wird in der STED-Mikroskopie die Probe mit einem kurzweiligen Laserpuls beleuchtet, der z.B. aus einer gepulsten Laserdiode stammt. Anschließend wird eine Abregung der Fluoreszenzmoleküle am Anregungsfokusrand durch einen langwelligen Laserpuls bewirkt, der eine hohe Intensität besitzt. Um die Photoschädlichkeit des langwelligen Pulses so gering wie möglich zu halten sollte er eine Pulsbreite besitzen, die im Bereich von ca. 100 ps bzw. länger liegt. Dieser langwellige Laserpuls kann z.B. aus einer zweiten Laserdiode stammen, welche bereits die entsprechende Pulsbreite besitzt oder durch Pulsverbreiterung eines kurzen langwelligen Laserpulses erzeugt werden. Eine Pulsverbreiterung lässt sich am zweckmäßigsten durch einen zweistufigen Prozess erzeugen. Zuerst durchläuft der kurze Puls einen Glasstab und wird dadurch auf eine Pulsbreite von einigen Pikosekunden gestreckt. Danach durchläuft der Laserpuls eine lange Glasfaser, in der er weiter verbreitet wird. Anstelle eines Glasstabs kann auch ein Glaskörper verwendet werden, in dem der Puls durch Totalreflexion mehrfach reflektiert wird und dadurch eine große Strecke innerhalb des Glaskörpers zurücklegt. Eine andere Möglichkeit den Laserpuls zu strecken ist die Verwendung von Beugungsgittern.

Um eine Abregung der Fluoreszenzmoleküle am Fokusrand zu erreichen muss die Abregungs-Punktbildfunktion speziell geformt werden. Hierzu werden Phasenfilter eingesetzt, welche sich im Strahlengang des langwelligen Laserstrahls befinden. Sie verändern die Wellenfront des Abregungsstrahls ortsabhängig. Phasenfilter werden derzeit durch Aufbringen einer transparenten Struktur (z.B. Magnesiumfluorid) auf ein Glassubstrat hergestellt. Das Licht, das die Struktur und das Glassubstrat durchdringt erfährt dann gegenüber dem Licht, welches nur das Substrat durchdringt eine Phasenverzögerung, die von der Dicke der Struktur und der Wellenlänge des Lichts abhängt. Bei Verwendung unterschiedlicher Wellenlängen, wie es z.B. bei der Verwendung von unterschiedlichen Fluoreszenzfarbstoffen der Fall ist, muss für jede Wellenlänge ein anderer Phasenfilter verwendet werden. Ein weiterer Nachteil ist, dass bei Verwendung eines breiten Wellenlängenspektrums zur Abregung, wie dies z.B. bei einer Pulsverbreiterung in einer Glasfaser entsteht bzw. bei Verwendung von photonischen Kristallfasern (photonic-band-gap-Fasern), die Phasenverschiebung durch den Phasenfilter nicht für alle Wellenlängen des ausgewählten Wellenlängenbereichs identisch ist. Dies führt zu einer nicht ideal geformten Abregungs-PSF (Point-spread-function) und damit in der Regel auch zu einer nicht gewünschten Reduktion der Fluoreszenz im scharfen Maximum der hochauflösenden PSF am Ort des geometrischen Fokus.

Für zahlreiche Verfahren der Auflösungserhöhung werden Phasenfilter benötigt. Dies gilt insbesondere für die STED-, STED-4Pi- und die up-conversion-depletion-Mikroskopie. Die Phasenfilter verändern die Phase der sie durchdringenden Wellenfront in Abhängigkeit des Orts. Standardmäßig werden diese Phasenfilter durch Aufbringen von Strukturen auf ein Glassubstrat erzeugt, so dass die durchgehende Wellenfront eine über dem Strahldurchmesser ortsabhängige Phasenverzögerung erfährt. Aufgrund dieses Phasenfilterdesigns ist die erzeugte Phasenverschiebung von der Wellenlänge des Lichts abhängig. Dies ist in der Regel jedoch nicht erwünscht, da damit für jede verwendete Wellenlänge ein anderer Phasenfilter benötigt wird.

Aus DE 101 05 391 A1 ist ein Scanmikroskop zum optischen Messen eines Probenpunktes einer Probe mit hoher Ortsauflösung mit einer Lichtquelle zum Aussenden eines zum Anregen eines Energiezustandes der Probe geeigneten Anregungslichtstrahls, einem Detektor zum Nachweis des Emissionslichts und einen von der Lichtquelle kommenden Stimulationslichtstrahl zum Erzeugen stimulierter Emission der von dem Anregungslichtstrahl angeregten Probe in dem Probenpunkt bekannt. Der Anregungslichtstrahl und der Stimulationslichtstrahl sind derart angeordnet, dass sich ihre Intensitätsverteilungen im Fokalbereich teilweise decken. Das Scanmikroskop ist dadurch gekennzeichnet, dass die, den Stimulationslichtstrahl formenden optischen Elemente zu mindestens einem Modul zusammengefasst sind, das im Strahlengang des Scanmikroskops positionierbar ist. In einer Ausführungsform sind Mittel zur Beeinflussung der Form des Fokus des Stimulationslichtstrahls vorgesehen.

Aus der US 5,742,577 ist eine optische Abtastvorrichtung für magnetooptische Speichervorrichtungen bekannt, die zum Auslesen von z.B. auf einer magneto-optischen Platte aufgezeichneten Informationen verwendet wird. Die Vorrichtung umfasst ein Kombinations-Phasenverzögerungs-Prisma, das mit einer ersten und einen zweiten reflektierenden Dünnschicht zur Phasendifferenzerzeugung beschichtet ist. Die erste Dünnschicht zur Phasendifferenzerzeugung reflektiert das einfallende Licht, ohne seine Phase zu ändern, während die zweite Dünnschicht das einfallende Licht reflektiert und dabei eine Phasenverzögerung von 180° erzeugt. Eine derartige Phasenverzögerung wird durch entsprechende Einstellung der Schichtdicken der Dünnschichten erreicht.

Aus E. Ingelstam, "A slit phase contrast apparatus with modified phase plates for the examination of optical gratings and other objects with variations in one dimension", THE INSTITUTION OF ELECTRICAL ENGINEERS, STEVENAGE, GB, 1951, ist eine Phasenkontrastvorrichtung zur Untersuchung von Fehlern in periodischen Gittern bekannt. Die Vorrichtung umfasst einen Phasenfilter mit einer teilweise metallisierten Glasoberfläche sowie eine in dem von dem Phasenfilter reflektierten Lichtstrahl angeordnete Linse zur Erzeugung eines Phasenkontrastbildes.

Aus der US 2004/0017572 A1 ist ein Verfahren zur Untersuchung der Oberflächenplasmaresonanz bestimmter Testschichten bekannt. Dabei wird ein Prisma mit einer teilweise metallisch beschichteten Basisfläche verwendet, auf die die zu untersuchenden Proben aufgebracht werden. Ein Beleuchtungslichtstrahl wird unter einem einstellbaren Winkel auf das Prisma gerichtet und das von der Testschicht reflektierte und/oder gestreute Licht wird mittels eines Detektors nachgewiesen.

Aus T. Watanabe et. al., Two-point-separation in super-resolution fluorescence microscope based on up-conversion fluorescence depletion technique", 2003, Optics Express, Vol.11, No 24, 1 Dezember 2003, ist ein der STED-Mikroskopie ähnliches Verfahren zur Auflösungssteigerung bekannt. In der sog. up-conversion-depletion-Mikroskopie wird der Angeregte Zustand nicht wie in der STED-Mikroskopie stimuliert abgeregt, sondern eine weitere Anregung in einen anderen Zustand bewirkt.

Der Erfindung liegt die Aufgabe zugrunde, ein Rastermikroskop insbesondere zum optischen Messen eines Probenpunktes einer Probe mit hoher Ortsauflösung anzugeben, das bei der Fokussierung des Lichtbündels eine weitestgehend wellenlängenunabhängige Formung des Strahlprofils in der Fokalebene ermöglicht.

Diese Aufgabe wird durch ein Rastermikroskop gelöst, das dadurch gekennzeichnet ist, dass das Mittel zur Formung des Fokus als dreidimensionaler geometrischer Körper ausgebildet ist, der aus einem ersten Material besteht und eine Fläche aufweist, die teilweise mit einem zweiten Material beschichtet ist, und dass das Mittel zur Formung des Fokus derart im Strahlengang des Lichtbündels angeordnet ist, dass der erste Teil des Lichtbündels nach Eintritt in den Körper an dem beschichteten Teil der Fläche reflektiert wird und der zweite Teil des Lichtbündels an dem nicht beschichteten Teil der Fläche totalreflektiert wird, so dass sich aufgrund der unterschiedlichen Brechungsindexübergänge eine ortsabhängige Phasenverschiebung über dem Strahldurchmesser des Lichtbündels ergibt.

Erfindungsgemäß umfasst das Rastermikroskop ein Mittel zur Formung des Fokus, das als dreidimensionaler geometrischer Körper ausgebildet ist, der aus einem ersten Material besteht und eine Fläche aufweist, die teilweise mit einem zweiten Material beschichtet ist. Der Körper ist derart im Strahlengang angeordnet, dass das Lichtbündel in den Körper eindringt und ein Teil des Lichtbündels von dem beschichteten Teil der Fläche und ein anderer Teil des Lichtbündels von dem nicht beschichteten Teil der Fläche totalreflektiert wird. Dementsprechend sind materialmäßig unterschiedlich beschaffene reflektierende Grenzflächen realisiert, wobei erkannt und ausgenutzt wurde, dass Lichtwellen bei der Reflexion an Grenzflächen unter bestimmten Umständen eine Phasenverschiebung erfahren. Diese durch Reflexion erzeugte Phasenverschiebung ist im Wesentlichen abhängig von den Brechungsindizes der Materialien an der Grenzfläche sowie von dem Reflexionswinkel. Lediglich indirekt, über die Abhängigkeit des Brechungsindex von der Wellenlänge, besteht dabei auch eine Abhängigkeit von der Phasenverschiebung von der Wellenlänge. Diese Abhängigkeit ist allerdings bei geeigneter Wahl der beteiligten Materialien sehr gering. Durch die erfindungsgemäße Vorkehrung von unterschiedlich beschaffenen Grenzflächen entstehen örtlich unterschiedliche Brechungsindexverhältnisse über dem Strahldurchmesser. Dies ermöglicht es, eine weitestgehend wellenlängenunabhängige Formung des Strahlprofils in der Fokalebene zu realisieren.

Besonders vorteilhaft kann das zweite Material ein Metall beinhalten. Besonders bevorzugt wird eine Ausführungsform, bei der das zweite Material eine metallische Beschichtung umfasst.

Vorzugsweise besteht das erste Material aus Glas und/oder transparentem Kunststoff und/oder einem Kristall. Das erste Material und/oder das zweite Material weist vorzugsweise eine niedrige Dispersion auf, um die Wellenlängenabhängigkeit so gering wie möglich zu halten.

Der dreidimensionale geometrische Körper ist bevorzugt in der Form eines Prismas oder eines Rhomboeders oder eines Quaders ausgebildet. Vorzugsweise tritt der Lichtstrahl unter einem Winkel im Bereich von 90 Grad in das erste Material ein und/oder aus, um eine räumlich spektrale Aufspaltung zu vermeiden.

Vorzugsweise ist die Phasenverschiebung weitgehend unabhängig von der Wellenlänge λ des Lichtbündels und beträgt vorzugsweise etwa λ/2 oder λ/4. Das Lichtbündel kann mehrere Wellenlängen aufweisen. Vorzugsweise beträgt die Phasenverschiebung für jeden Wellenlängenanteil λ/2 oder λ/4.

Vorzugsweise ist das Lichtbündel in Bezug auf die Reflexion s-polarisiert. Die Verwendung von s-polarisiertem Licht erlaubt in der Regel größere Phasendifferenzen Δϕ als die Verwendung von p-polarisiertem Licht. Daher ist in der Regel die Verwendung von s-polarisiertem Licht der Verwendung von p-polarisiertem Licht vorzuziehen

In einer ganz besonders bevorzugten Variante ist die Phasenverschiebung durch Veränderung des Reflexionswinkels einstellbar. Hierzu kann beispielsweise eine Drehvorrichtung zum Drehen bzw. Schwenken des ersten Materials und/oder des zweiten Materials vorgesehen sein. Es ist auch möglich, die Einfallsrichtung des Lichtbündels - beispielsweise mit einer Kippspiegelanordnung zu verändern.

Eine weitere Möglichkeit zur Realisierung des Phasenfilters ist die Phasenverschiebung durch einen mehrstufigen Prozess zu erzeugen. Hierzu wird das Licht mehrfach an Grenzflächen reflektiert bevor es das erste Material verlässt. Es können also weitere Grenzflächen vorgesehen sein, wobei die weiteren Grenzflächen das Lichtbündel oder Teile des Lichtbündels reflektieren.

Die Strukturen und Materialien können an jeder Grenzfläche verschieden sein. Die Struktur an einer Grenzfläche kann aus verschiedenen Materialien bestehen. Es kann auch vorteilhaft sein die Struktur, welche die Phasenverschiebung erzeugt, durch mikroskopisch kleine Substrukturen veränderlicher Dichte auszugestalten. Insoweit kann das erste Material und/oder das zweite Material eine Substruktur aufweisen.

Vorzugsweise ist der geformte Fokus ein Hohlfokus oder weist die Form des Fokus eine Ringform auf. Diese Fokusformen sind insbesondere für die Mikroskopie besonders gut nutzbar.

Vorzugsweise regt das Rastermikroskop eine Probe in einem Probenbereich mit einem Anregungslichtbündel optisch an. In einer bevorzugten Variante erzeugt das Lichtbündel, das den geformten Fokus aufweist, in dem angeregten Probenbereich oder in einem Teilbereich des angeregten Probenbereichs stimulierte Emission. In einer anderen Variante erzeugt das Lichtbündel in dem angeregten Probenbereich oder in einem Teilbereich des angeregten Probenbereichs eine weitere Anregung der Probe, insbesondere eine weitere Anregung bereits angeregter Zustände.

Das Rastermikroskop ist vorzugsweise als konfokales Rastermikroskop, insbesondere als ein STED-Mikroskop oder ein up-conversion-depletion-Mikroskop oder 4PI-Mikroskop (z.B. Doppelkonfokales Rastermikroskop) ausgebildet.

In der Zeichnung ist der Erfindungsgegenstand schematisch dargestellt und wird anhand der Figuren nachfolgend beschrieben. Dabei zeigen:
- Fig. 1: ein Mittel zur Fokusformung gemäß einem ersten Ausführungsbeispiel eines erfindungsgemäßen Rastermikroskops,
- Fig. 2: Grenzflächen des in Fig. 1 gezeigten Mittels zur Fokusformung,
- Fig. 3: die Phasenverschiebung für s-polarisiertes Licht,
- Fig. 4: die Phasenverschiebung bei Totalreflexion für Glas,
- Fig. 5: ein Mittel zur Fokusformung gemäß einem zweiten Ausführungsbeispiel eines erfindungsgemäßen Rastermikroskops,
- Fig. 6: einen Teil eines erfindungsgemäßen Rastermikroskops gemäß einem dritten Ausführungsbeispiel und
- Fig. 7: ein erfindungsgemäßes Rastermikroskop.

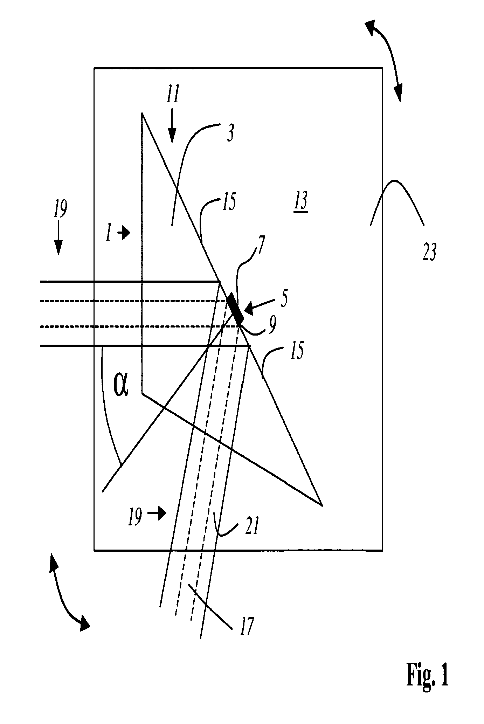

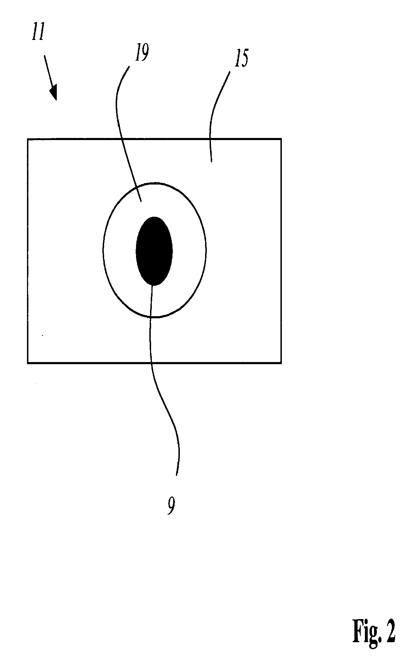

Fig. 1 zeigt ein Mittel zur Fokusformung gemäß einem ersten Ausführungsbeispiel eines erfindungsgemäßen Rastermikroskops. Das Mittel zur Fokusformung umfasst ein erstes Material 1, das als Glasprisma 3 ausgebildet ist. Auf einen Teil einer Fläche 11 des Glasprismas 3 ist ein zweites Material 5 als metallische Beschichtung 7 aufgedampft. Zwischen der metallischen Beschichtung 7 und dem Glasprisma 3 befindet sich eine erste Grenzfläche 9. Der nicht beschichtete Teil der Fläche 11 des Glasprismas 3 bildet zu einem dritten Material 13, nämlich der umgebenden Luft eine zweite Grenzfläche 15. Ein erster Teil 17 eines auf die Fläche 11 des Glasprismas treffenden Lichtbündels 19 wird von der ersten Grenzfläche 9 reflektiert, während ein zweiter Teil 21 des Lichtbündels 19 von der die erste Grenzfläche 9 umgebenden zweiten Grenzfläche 15 reflektiert wird. Aufgrund der unterschiedlichen Brechungsindexübergänge Glas/Metall und Glas/Luft an der ersten Grenzfläche 9 bzw. an der zweiten Grenzfläche 15 tritt eine ortsabhängige Phasenverschiebung über dem Strahldurchmesser des Lichtbündels 19 auf. Diese Phasenverschiebung ist unter anderem abhängig vom Einfallswinkel Alpha des Lichtbündels 19 auf die Fläche 11. Der dargestellte Teil des erfindungsgemäßen Rastermikroskops umfasst einen Drehtisch 23, mit dem das Glasprisma 3 samt seiner ersten Grenzfläche 9 und seiner zweiten Grenzfläche 15 gedreht und damit der Einfallswinkel Alpha geändert werden kann. Fig. 2 zeigt die Fläche 11 des Glasprismas 3, sowie die Projektion des auf die Fläche treffenden Lichtbündels 19. Der erste Teil 17 des Lichtbündels 19 trifft auf die erste Grenzfläche 9, während der zweite Teil 21 des Lichtbündels 19 auf die zweite Grenzfläche 15 trifft.

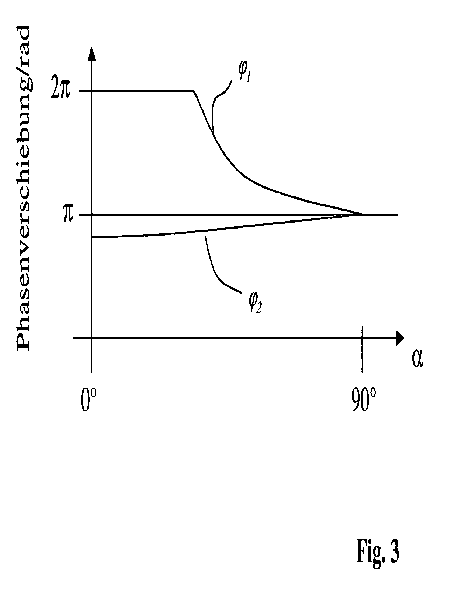

Fig. 3 zeigt die Phasenverschiebung ϕ₁ für s-polarisiertes Licht bei der internen Reflexion an der Grenzfläche Glas/Luft (zweite Grenzfläche 15) und die Phasenverschiebung ϕ₂ für s-polarisiertes Licht bei der internen Reflexion an den Glas/Metall (erste Grenzfläche 9) in Abhängigkeit vom Reflexionswinkel α. Die Differenz der Phasenverschiebung Δϕ zwischen den Lichtwellen, die an den Grenzflächen Glas/Luft und Glas/Metall reflektiert wurden, lässt sich durch geeignete Wahl des Reflexionswinkels α über einen großen Bereich frei einstellen. Vorzugsweise wird ein Reflexionswinkel α gewählt bei dem das Licht, welches nicht auf die metallische Struktur trifft, durch Totalreflexion an der Grenzfläche reflektiert wird um keine Lichtverluste bei der Reflexion zu erhalten.

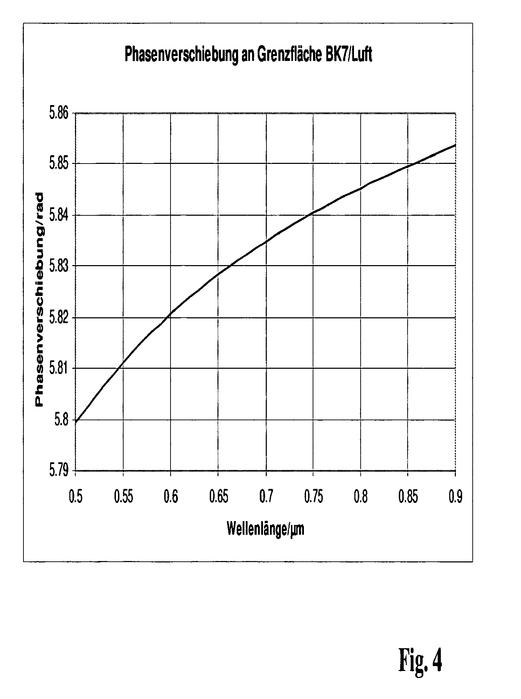

Fig. 4 zeigt die Phasenverschiebung bei Totalreflektion für Glas der Sorte BK7 in Abhängigkeit von der Wellenlänge. Aus der Abbildung ist ersichtlich, dass die Abhängigkeit der Phasenverschiebung von der Wellenlänge in einem Wellenlängenbereich von 500 nm bis 800 nm nur 0,05 Rad beträgt und damit sehr gering ist.

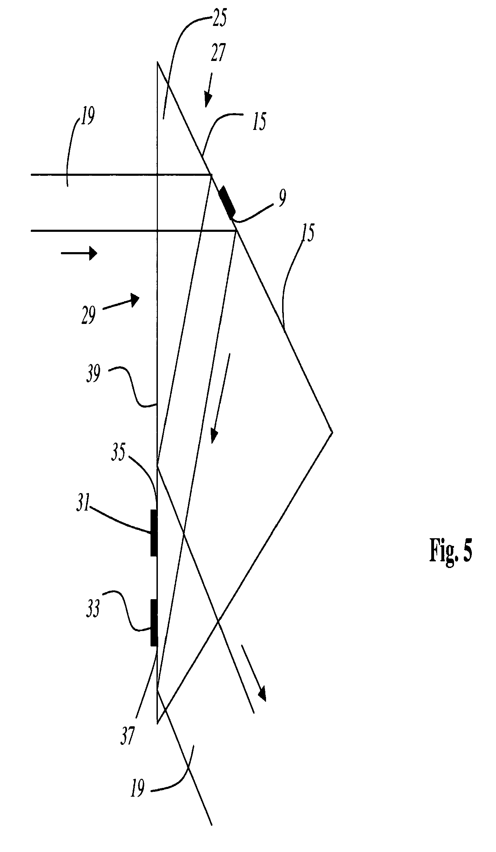

Fig. 5 zeigt ein anderes Mittel zur Fokusformung gemäß einem zweiten Ausführungsbeispiel eines erfindungsgemäßen Rastermikroskops. Das Mittel besteht aus einem Glasprisma 25. Das Glasprisma weist eine erste Fläche 27 mit einer ersten Grenzfläche 9 und einer zweiten Grenzfläche 15 auf. Das einfallende Lichtbündel 19 wird an der ersten Fläche 27 reflektiert und gelangt zur zweiten Fläche 29, die ein viertes Material 31 und ein fünftes Material 33 jeweils als Beschichtung auf der Fläche 29 trägt. Das Lichtbündel 19 wird von der Fläche 29 reflektiert. Das vierte Material 31 bildet mit dem Glasprisma 25 eine dritte Grenzfläche 35 und das fünfte Material 33 bildet mit dem Glasprisma 25 eine vierte Grenzfläche 37. Die Grenzflächen 35, 37 sind umgeben von fünften Grenzfläche 39, die aus dem Glasluftübergang zwischen dem Glasprisma 25 und der Umgebungsluft gebildet ist. Die Phasenverschiebung innerhalb des Lichtbündels 19 wird bei diesem Phasenfilter durch einen mehrstufigen Prozess, nämlich durch die beiden Reflektionen an den Flächen 27 und 29 erzeugt.

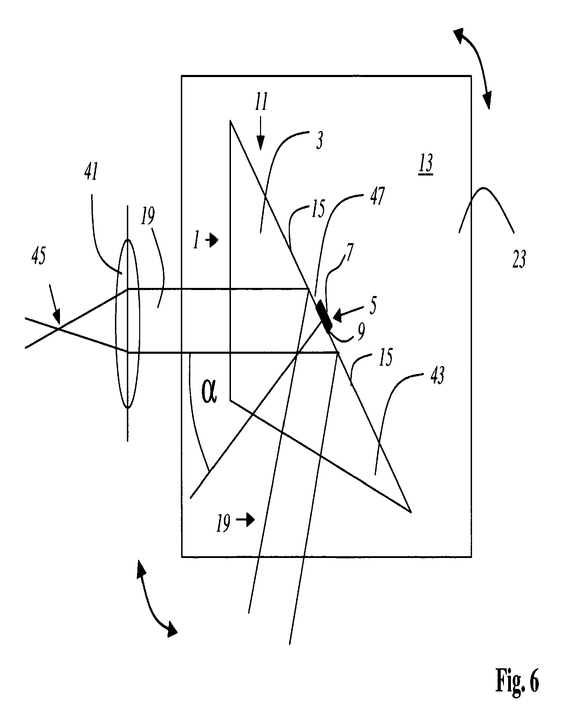

Fig. 6 zeigt eine einen Teil eines erfindungsgemäßen Rastermikroskops gemäß einem dritten Ausführungsbeispiel mit einer fokussierenden Optik 41, die ein Lichtbündel 19 fokussiert mit einem Mittel 43 zur Formung des Fokus 45 des Lichtbündels 19. Das Mittel 43 zur Formung des Fokus 45 beinhaltet im Wesentlichen den bezüglich Fig. 1 dargestellten Phasenfilter, wobei das Mittel 43 im Bereich einer Fourierebene 47 zur Fokalebene der fokussierenden Optik 41 angeordnet ist. Die Form des Fokus 45 ergibt sich letztlich aus der Fouriertransformierten der Phasenverschiebung, die der Phasenfilter dem Lichtbündel 19 aufprägt.

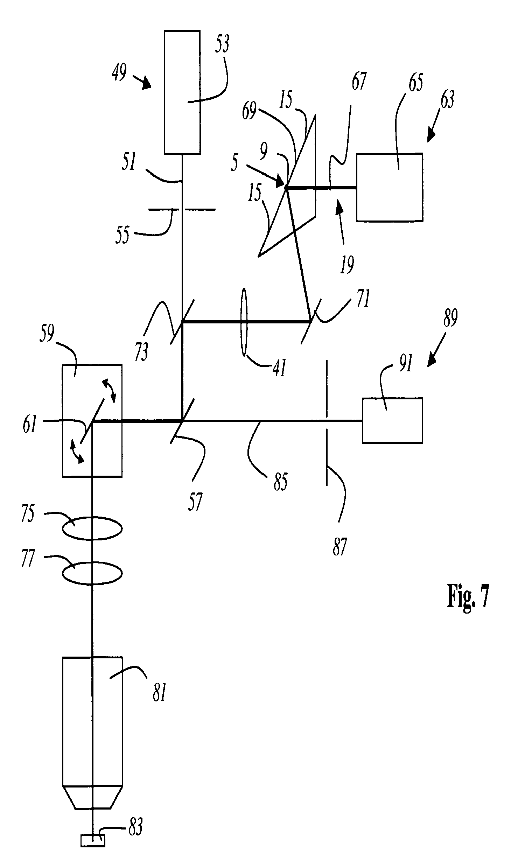

Fig. 7 zeigt ein erfindungsgemäßes Rastermikroskop mit einer ersten Lichtquelle 49, die ein Anregungslichtbündel 51 emittiert. Die erste Lichtquelle 49 ist als Pulslaser 53, nämlich als gepulster Diodenlaser ausgeführt. Das Anregungslichtbündel 51 trifft nach Passieren der Anregungslochblende 55 auf den Hauptstrahlteiler 57, der das Anregungslichtbündel 51 zu der Strahlablenkeinrichtung 59, die einen kardanisch aufgehängten Scanspiegel 61 beinhaltet, lenkt. Das Rastermikroskop umfasst eine zweite Lichtquelle 63, die als modengekoppelter Titansaphirlaser 65, auf den die erste Lichtquelle 49 synchronisiert ist, ausgebildet ist. Die zweite Lichtquelle 63 emittiert ein Lichtbündel 19, das im Weiteren als Stimulationslichtbündel 67 bezeichnet ist. Das Stimulationslichtbündel 67 trifft auf einen Phasenfilter 69, der analog dem Phasenfilter, der in Fig. 1 gezeigt ist, ausgebildet ist. Der Phasenfilter besteht aus einem Glasprisma 3 und weist eine erste Grenzfläche 9 und eine zweite Grenzfläche 15 auf. Das von dem Phasenfilter 69 kommende Stimulationslichtbündel 67 wird von dem Umlenkspiegel 71 zu einem dichroitischen Strahlteiler 73 gelenkt. Der dichroitische Strahlteiler 73 vereinigt das Anregungslichtbündel 51 und das Stimulationslichtbündel 67 auf einen gemeinsamen Strahlengang. Auch das Stimulationslichtbündel 67 wird von dem Hauptstrahlteiler 57 zur Strahlablenkeinrichtung 59 gelenkt. Die Strahlablenkeinrichtung 59 führt das Anregungslichtbündel 51 und das Stimulationslichtbündel 67 gemeinsam durch die Scanoptik 75, die Tubusoptik 77 sowie die fokussierende Optik 79, nämlich das Mikroskopobjektiv 81 über bzw. durch die Probe 83. Der Fokus des Anregungslichtbündels 51 regt die Probe in einem Probenpunkt optisch an, während der Fokus des Stimulationslichtbündels einen Außenbereich des angeregten Probenbereichs stimuliert abregt. Hierzu ist der Fokus des Stimulationslichtbündels geeignet, nämlich als innenhohler Fokus ausgebildet. Das Phasenfilter 69 ist in dieser Variante in einer zur Fokalebene des Mikroskopobjektivs 81 konjugierten Ebene (Fourierebene) angeordnet. Das von der Probe ausgehende Detektionslicht 85 gelangt durch das Mikroskopobjektiv 81, die Tubusoptik 77 , die Scanoptik 75 zur Strahlablenkeinrichtung, von dieser zum Hauptstrahlteiler 57, passiert diesen und die nachfolgende Detektionslochblende 87 und gelangt schließlich zu dem Detektor 89, der als Multibanddetektor 91 ausgeführt ist. Der Detektor erzeugt elektrische zur Lichtleistung des Detektionslichts 85 proportionale Signale, die zur Bilddarstellung gemeinsam mit den Positionssignalen der Strahlablenkeinrichtung 59 an eine nicht gezeigte Verarbeitungseinheit weitergegeben werden.

Das gezeigte Rastermikroskop kann mit Proben unterschiedlichster Charakteristik betrieben werden, da es auf verschiedene Stimulationswellenlängen einfach einstellbar ist.

Das Rastermikroskop findet bevorzugt Verwendung in der konfokalen Rastermikroskopie, insbesondere in der STED-Mikroskopie oder der up-conversion-depletion-Mikroskopie oder der 4P1-Mikroskopie.

## Patentansprüche

1. Rastermikroskop mit einer Lichtquelle (63) zur Erzeugung eines Beleuchtungslichtbündels (19), mit einer fokussierenden Optik (81) zur Fokussierung des Lichtbündels (19) in einer Brennebene, und mit einem Mittel (43) zur Formung des Fokus (45) des Lichtbündels (19), wobei das Mittel (43) zur Formung des Fokus (45) zwischen einem ersten Teil (17) des Lichtbündels (19) und einem zweiten Teil (21) des Lichtbündels (19) eine Phasenverschiebung bewirkt,
**dadurch gekennzeichnet, dass** das Mittel (43) zur Formung des Fokus (45) als dreidimensionaler geometrischer Körper ausgebildet ist, der aus einem ersten Material (1) besteht und eine Fläche (11) aufweist, die teilweise mit einem zweiten Material (5) beschichtet ist, und dass das Mittel (43) zur Formung des Fokus (45) derart im Strahlengang des Lichtbündels (19) angeordnet ist, dass der erste Teil (17) des Lichtbündels (19) nach Eintritt in den Körper an dem beschichteten Teil (9) der Fläche (11) reflektiert wird und der zweite Teil (21) des Lichtbündels (19) an dem nicht beschichteten Teil (15, 29) der Fläche (11) totalreflektiert wird, so dass sich aufgrund der unterschiedlichen Brechungsindexübergänge eine ortsabhängige Phasenverschiebung über dem Strahldurchmesser des Lichtbündels (19) ergibt.

2. Rastermikroskop nach Anspruch 1, **dadurch gekennzeichnet, dass** das zweite Material (5) ein Metall beinhaltet.

3. Rastermikroskop nach Anspruch 2, **dadurch gekennzeichnet, dass** das zweite Material (5) eine metallische Beschichtung umfasst.

4. Rastermikroskop nach einem der Ansprüche 1 bis 3, **dadurch gekennzeichnet, dass** das erste Material (1) aus Glas und/oder transparentem Kunststoff und/oder einem Kristall besteht.

5. Rastermikroskop nach einem der Ansprüche 1 bis 4, **dadurch gekennzeichnet, dass** das erste Material (1) und/oderdas zweite Material (5) eine niedrige Dispersion aufweist, um die Wellenlängenabhängigkeit so gering wie möglich zu halten.

6. Rastermikroskop nach einem der Ansprüche 1 bis 5, **dadurch gekennzeichnet, dass** es sich bei dem dreidimensionalen geometrischen Körper um ein Prisma, einen Rhomboeder oder um einen Quader handelt.

7. Rastermikroskop nach einem der Ansprüche 1 bis 6, **dadurch gekennzeichnet, dass** die Phasenverschiebung λ/2 oder λ/4 beträgt.

8. Rastermikroskop nach einem der Ansprüche 1 bis 7, **dadurch gekennzeichnet, dass** das Lichtbündel (19) mehrere Wellenlängen aufweist und dass die Phasenverschiebung für jeden Wellenlängenanteil λ/2 oder λ/4 beträgt.

9. Rastermikroskop nach einem der Ansprüche 1 bis 8, **dadurch gekennzeichnet, dass** das Lichtbündel (19) in Bezug auf die Reflexion s-polarisiert ist.

10. Rastermikroskop nach einem der Ansprüche 1 bis 9, **dadurch gekennzeichnet, dass** durch Veränderung des Reflexionswinkels die Phasenverschiebung einstellbar ist.

11. Rastermikroskop nach einem der Ansprüche 1 bis 10, **dadurch gekennzeichnet, dass** weitere Grenzflächen (35, 37, 39) vorgesehen sind und dass die weiteren Grenzflächen (35, 37, 39) das Lichtbündel (19) oder Teile des Lichtbündel (19) reflektieren.

12. Rastermikroskop nach einem der Ansprüche 1 bis 11, **dadurch gekennzeichnet, dass** der geformte Fokus (45) ein Hohlfokus ist.

13. Rastermikroskop nach einem der Ansprüche 1 bis 12, **dadurch gekennzeichnet, dass** der geformte Fokus (45) eine Ringform aufweist.

14. Rastermikroskop nach einem der Ansprüche 1 bis 13, **dadurch gekennzeichnet, dass** das Rastermikroskop eine Probe in einem Probenbereich mit einem Anregungslichtbündel optisch anregt.

15. Rastermikroskop nach Anspruch 14, **dadurch gekennzeichnet, dass** das Lichtbündel (19) in dem angeregten Probenbereich oder in einem Teilbereich des angeregten Probenbereichs stimulierte Emission erzeugt.

16. Rastermikroskop nach Anspruch 14, **dadurch gekennzeichnet, dass** das Lichtbündel (19) in dem angeregten Probenbereich oder in einem Teilbereich des angeregten Probenbereichs eine weitere Anregung der Probe, insbesondere eine weitere Anregung bereits angeregter Zustände, erzeugt.

17. Rastermikroskop nach einem der Ansprüche 1 bis 16, **dadurch gekennzeichnet, dass** das Rastermikroskop ein konfokales Rastermikroskop, ein STED-Mikroskop oder ein up-conversion-depletion-Mikroskop oder ein 4PI-Mikroskop ist.

## Claims

1. A scanning microscope having a light source (63) for generating an illuminating light beam (19), a focusing lens (81) for focusing the light beam (19) in a focal plane, and having a means (43) for forming the focus (45) of the light beam (19), the means (43) for forming the focus (45) causing a phase shift between a first part (17) of the light beam (19) and a second part (21) of the light beam (19), **characterised in that** the means (43) for forming the focus (45) is in the form of a three-dimensional geometric body that comprises a first material (1) and has a surface (11) that is partially coated with a second material (5), and **in that** the means (43) for forming the focus (45) is arranged in the optical path of the light beam (19) in such a manner that the first part (17) of the light beam (19), after entering the body, is reflected at the coated part (9) of the surface (11) and the second part (21) of the light beam (19) is totally reflected at the non-coated part (15, 29) of the surface (11), so that by virtue of the different refractive index transitions a position-dependent phase shift over the beam diameter of the light beam (19) occurs.

2. A scanning microscope according to Claim 1, **characterised in that** the second material (5) contains a metal.

3. A scanning microscope according to Claim 2, **characterised in that** the second material (5) comprises a metallic coating.

4. A scanning microscope according to any one of Claims 1 to 3, **characterised in that** the first material (1) comprises glass and/or transparent plastics material and/or a crystal.

5. A scanning microscope according to any one of Claims 1 to 4, **characterised in that** the first material (1) and/or the second material (5) exhibits a low dispersion in order to keep the wavelength dependency as low as possible.

6. A scanning microscope according to any one of Claims 1 to 5, **characterised in that** the three-dimensional geometric body is a prism, a rhomboid or a cuboid.

7. A scanning microscope according to any one of Claims 1 to 6, **characterised in that** the phase shift is λ/2 or λ/4.

8. A scanning microscope according to any one of Claims 1 to 7, **characterised in that** the light beam (19) has a plurality of wavelengths and **in that** the phase shift for each wavelength portion is λ/2 or λ/4.

9. A scanning microscope according to any one of Claims 1 to 8, **characterised in that** the light beam (19) is s-polarised in relation to the reflection.

10. A scanning microscope according to any one of Claims 1 to 9, **characterised in that** the phase shift is adjustable by changing the reflection angle.

11. A scanning microscope according to any one of Claims 1 to 10, **characterised in that** further interfaces (35, 37, 39) are provided, and **in that** the further interfaces (35, 37, 39) reflect the light beam (19) or parts of the light beam (19).

12. A scanning microscope according to any one of Claims 1 to 11, **characterised in that** the focus formed (45) is a hollow focus.

13. A scanning microscope according to any one of Claims 1 to 12, **characterised in that** the focus formed (45) has an annular shape.

14. A scanning microscope according to any one of Claims 1 to 13, **characterised in that** the scanning microscope optically excites a sample in a region of the sample with an excitation light beam.

15. A scanning microscope according to Claim 14, **characterised in that** the light beam (19) generates stimulated emission in the excited region of the sample or in a part of the excited region of the sample.

16. A scanning microscope according to Claim 14, **characterised in that** the light beam (19) generates a further excitation of the sample, in particular a further excitation of already excited states, in the excited region of the sample or in a part of the exited region of the sample.

17. A scanning microscope according to any one of Claims 1 to 16, **characterised in that** the scanning microscope is a confocal scanning microscope, a STED microscope or an up-conversion-depletion microscope or a 4Pi microscope.

## Revendications

1. Microscope à balayage avec une source lumineuse (63) pour engendrer un faisceau lumineux (19) d'éclairage, avec une optique (81) focalisante pour la focalisation du faisceau lumineux (19) dans un plan focal et avec un moyen (43) pour la formation du foyer (45) du faisceau lumineux (19), le moyen (43) pour la formation du foyer (45) effectuant un décalage de phase entre une première partie (17) du faisceau lumineux (19) et une seconde partie (21) du faisceau lumineux (19),
**caractérisé par le fait que** le moyen (43) pour la formation du foyer (45) est réalisé sous la forme d'un corps géométrique tridimensionnel qui est constitué d'un premier matériau (1) et présente une surface (11) qui est partiellement recouverte par un second matériau (5) et que le moyen (43) pour la formation du foyer (45) est disposé dans la marche des rayons du faisceau lumineux (19) de telle manière que la première partie (17) du faisceau lumineux (19) est, après entrée dans le corps, réfléchie sur la partie recouverte (9) de la surface (11) et la seconde partie (21) du faisceau lumineux (19) est totalement réfléchie sur la partie non recouverte (15, 29) de la surface (11), de telle sorte qu'il résulte un décalage de phase dépendant du lieu sur le diamètre de rayon du faisceau lumineux (19) en raison des différentes transitions d'indice de réfraction.

2. Microscope à balayage selon la revendication 1, **caractérisé par le fait que** le second matériau (5) contient un métal.

3. Microscope à balayage selon la revendication 2, **caractérisé par le fait que** le second matériau (5) comprend un revêtement métallique.

4. Microscope à balayage selon l'une des revendications 1 à 3, **caractérisé par le fait que** le premier matériau (1) est constitué d'un verre et/ou d'une matière synthétique transparente et/ou d'un cristal.

5. Microscope à balayage selon l'une des revendications 1 à 4, **caractérisé par le fait que** le premier matériau (1) et/ou le second matériau (5) présentent une dispersion basse afin de maintenir aussi faible que possible la dépendance à la longueur d'onde.

6. Microscope à balayage selon l'une des revendications 1 à 5, **caractérisé par le fait qu'**il s'agit pour le corps géométrique tridimensionnel d'un prisme, d'un rhomboèdre ou d'un parallélépipède.

7. Microscope à balayage selon l'une des revendications 1 à 6, **caractérisé par le fait que** le décalage de phase est de λ/2 ou λ/4.

8. Microscope à balayage selon l'une des revendications 1 à 7, **caractérisé par le fait que** le faisceau lumineux (19) présente plusieurs longueurs d'onde et que le décalage de phase pour chaque portion de longueur d'onde est de λ/2 ou λ/4.

9. Microscope à balayage selon l'une des revendications 1 à 8, **caractérisé par le fait que** le faisceau lumineux (19) subit une polarisation s par rapport à la réflexion.

10. Microscope à balayage selon l'une des revendications 1 à 9, **caractérisé par le fait que** le décalage de phase peut être réglé par modification de l'angle de réflexion.

11. Microscope à balayage selon l'une des revendications 1 à 10, **caractérisé par le fait que** d'autres surfaces limites (35, 37, 39) sont prévues et que les surfaces limites (35, 37, 39) réfléchissent le faisceau lumineux (19) ou des parties du faisceau lumineux (19).

12. Microscope à balayage selon l'une des revendications 1 à 11, **caractérisé par le fait que** le foyer (45) formé est un foyer creux.

13. Microscope à balayage selon l'une des revendications 1 à 12, **caractérisé par le fait que** le foyer (45) formé présente une forme annulaire.

14. Microscope à balayage selon l'une des revendications 1 à 13, **caractérisé par le fait que** le microscope à balayage excite une éprouvette dans une zone d'échantillonnage par un faisceau lumineux d'excitation.

15. Microscope à balayage selon la revendication 14, **caractérisé par le fait que** le faisceau lumineux (19) engendre une émission stimulée dans la zone d'échantillonnage excitée ou une partie de la zone d'échantillonnage excitée.

16. Microscope à balayage selon la revendication 14, **caractérisé par le fait que** le faisceau lumineux (19) engendre dans la zone d'échantillonnage excitée ou dans une zone partielle de la zone d'échantillonnage excitée une excitation supplémentaire de l'éprouvette, en particulier une excitation supplémentaire d'états déjà excités.

17. Microscope à balayage selon l'une des revendications 1 à 16, **caractérisé par le fait que** le microscope à balayage est un microscope à balayage à foyer commun, un microscope à balayage STED ou un microscope up-conversion-depletion ou un microscope 4PI.
